# EUROPEAN PATENT SPECIFICATION

(11) **EP 1 089 617 B1**
(45) Date of publication and mention of the grant of the patent: **14.03.2007**
(21) Application number: 00913160.8
(22) Date of filing: 15.03.2000
(51) Int. Cl.: A01K 15/00, A01K 11/00, A01K 29/00, A61D 7/00, A61M 15/08

(54) **A NOSE RING**
NASENRING
ANNEAU NASAL

(30) Priority: 23.04.1999 NL 1011884
(43) Date of publication of application: 11.04.2001
(73) Proprietor: MAASLAND N.V., 3147 PA Maassluis (NL)
(72) Inventor: RICHARD, Xavier, F-67290 Wingen sur Morder (FR)
(74) Representative: Corten, Maurice Jean F.M.
(86) International application number: PCT/NL2000/000173
(87) International publication number: WO 2000/064245

(56) References cited:
- EP-A- 0 083 847
- WO-A-95/02957
- CH-A- 392 142
- NL-A- 7 606 727
- US-A- 4 369 783

## Description

The invention relates to a device for administering a biologically active component to an individual.

Such a device is known from document US-A-4,369,783. In this document a device for the prophylactic or therapeutic treatment of cattle is described.

The invention aims at rendering the above-mentioned device more multifunctional.

In accordance with the invention this is achieved by the features of claim 1. For the purpose of administering the substances simultaneously or separately or selectively via the administration means, the administration means comprise switch means.

The identification means comprise a transponder and/or a label. In the case that a cow enters a concentrate station or e.g. a milk box with a milking robot, it is possible to read in a very simple manner which animal is entering a relevant milk box and/or a relevant feeding station.

The measuring means and/or the administration means are disposed in or near the fastening means. Because of the fact that the fastening means are provided in the vicinity of the nasal mucous membrane, it is possible to carry out very accurate measurements and to administer substances via the administration means in an effective manner. It will be obvious that for other sensors, to be mentioned hereafter, which sensors do no carry out measurements on the nasal mucous membrane directly, it will be possible to be disposed at another place in the device than in the vicinity of the fastening means. A further improvement may be achieved in that the measuring means and/or the administration means comprise a contact element which is in close contact with the nasal mucous membrane after the device has been fastened. The measuring means may comprise various sensors, such as e.g. temperature sensors, heartbeat sensors, respiration rhythm sensors, respiration analysis equipment, sensors by means of which the glucose and/or protein content and/or the hormone level in the nasal mucous membrane and/or the blood and/or the excretions of the nasal mucous membrane are measured and sensors by means of which a microbiological diagnosis of the nasal mucous membrane and/or the excretions thereof is made. It is further possible to register the animal's behaviour by providing the measuring means with motion sensors with the aid of which the movements of the head are measured and recorded and on the basis of which measurements there is established whether an animal is e.g. on heat and/or ill. Such an indication is also obtained by means of a sensor that measures colour changes and/or the degree of humidity of the nose and/or the nasal mucous membrane. For recording colour changes there is preferably used an optical sensor.

The invention will now be explained in further detail with reference to an embodiment in which:

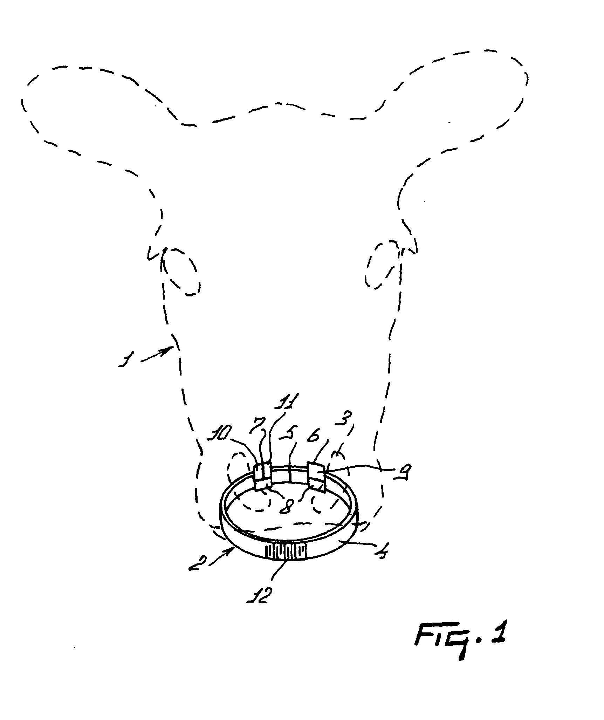

Figure 1 shows schematically the head of a cow 1 wearing a device 2 according to the invention through the nasal septum of the nose 3.

In the present embodiment the device 2 is designed as a nose ring. The nose ring comprises a circular body 4 which is provided with fastening means 5 with the aid of which the nose ring can be fitted in the nose 3. The nose ring is further provided with measuring means 6 with the aid of which the physical condition of in this case the cow can be determined. The nose ring is further provided with administration means 7 with the aid of which biologically active components can be administered to the body of a cow 1. Both the measuring means 6 and the administration means 7 comprise a contact element 8 which is in contact with the nasal mucous membrane of the nose 3 after the nose ring has been fastened. The contact element 8 of the measuring means 6 is connected with various, (non-shown) sensors 9 by means of which the physical condition of the animal can be determined. These sensors 9 may comprise e.g. a temperature sensor, a sensor for recording the heartbeat, a sensor for recording the respiration rhythm, a respiration analysis device by means of which e.g. the CO₂ and/or the H₂O and/or the O₂ content of the exhaled air is determined and another sensor by means of which the glucose and/or protein content and/or the hormone level in the nasal mucous membrane and/or the blood and/or the excretions of the nasal mucous membrane are measured. It is further possible for the contact element 8 to be connected with a sensor by means of which a microbiological diagnosis of the nasal mucous membrane and/or the excretions thereof can be made. It is further possible to have a motion sensor built in into the nose ring, by means of which motion sensor movements of the head are measured and recorded. It is also possible to provide the measuring ring with a sensor by means of which colour changes and/or the degree of humidity of the nose and/or the nasal mucous membrane are measured.

As shown in Figure 1, the administration means 7 comprise two receptacles 10 and 11 for storing biologically active components, which receptacles 10 and 11 are in connection with the contact element 8. With the (non-shown) switch means the biologically active components from the receptacles 10 and 11 can be administered selectively.

The nose ring is further provided with identification means 12 with the aid of which the identity of the animal is established. In the present embodiment the identification means 12 comprise a bar code. However, it will be obvious that the identification means 12 may comprise any other suitable form of means, such as e.g. a transponder by means of which the animal can be identified.

## Claims

1. A device which comprising fastening means for fitting the device to and/or in and/or through the nose (3) of preferably an animal, such as a cow, the device (2) comprises measuring means (6) for determining the physical condition of the individual belonging to the nose and administration means (7) for providing the individual with biologically active components, such as e.g. medicaments, minerals, vitamins and similar **characterized in that** the administration means (7) comprise one or more receptacles (10, 11) for storing the biologically active components and **in that** the administration means (7) comprise switch means with the aid of which a specific substance from a specific receptacle is selectively administered.

2. A device as claimed in claim 1, **characterized in that** the administration means (7) are disposed in or near the fastening means (5).

3. A device as claimed in claim 2, **characterized in that** the administration means (7) comprise a contact element (8) which is in contact with the nasal mucous membrane after the device (2) has been fastened.

4. A device as claimed in any one of the preceding claims, **characterized in that** the device is designed as a nose ring.

## Patentansprüche

1. Vorrichtung mit einer Anbringungsvorrichtung zum Anbringen der Vorrichtung an und/oder in und/oder durch die Nase (3) vorzugsweise eines Tieres, wie z. B. einer Kuh, wobei die Vorrichtung (2) eine Meßvorrichtung (6) zum Ermitteln der körperlichen Verfassung des zu der Nase gehörenden Tieres sowie eine Verabreichungsvorrichtung (7) zum Versorgen des Tieres mit biologisch aktiven Bestandteilen, wie z. B. Medikamenten, Mineralien, Vitaminen und dergleichen umfaßt,
**dadurch gekennzeichnet, daß** die Verabreichungsvorrichtung (7) einen oder mehrere Behälter (10, 11) zur Aufnahme der biologisch aktiven Bestandteile umfaßt, und daß die Verabreichungsvorrichtung (7) eine Schaltvorrichtung umfaßt, mittels der ein bestimmte Substanz aus einem bestimmten Behälter gezielt verabreicht wird.

2. Vorrichtung nach Anspruch 1,
**dadurch gekennzeichnet, daß** die Verabreichungsvorrichtung (7) in oder nahe der Anbringungsvorrichtung (5) angeordnet ist.

3. Vorrichtung nach Anspruch 2,
**dadurch gekennzeichnet, daß** die Verabreichungsvorrichtung (7) ein Kontaktelement (8) umfaßt, das nach Anbringung der Vorrichtung (2) mit der Nasenschleimhaut in Kontakt steht.

4. Vorrichtung nach einem der vorhergehenden Ansprüche,
**dadurch gekennzeichnet, daß** die Vorrichtung als Nasenring ausgeführt ist.

## Revendications

1. Dispositif qui comprend des moyens d'attache destinés à ajuster le dispositif aux et/ou dans les et/ou à travers les naseaux (3) d'un animal de préférence tel qu'une vache, le dispositif (2) comprenant des moyens de mesure (6) pour déterminer la condition physique de l'individu présentant les naseaux et des moyens de distribution (7) pour alimenter l'individu en composants actifs biologiques, comme, par exemple, des médicaments, des minéraux des vitamines et similaire, **caractérisé en ce que** les moyens de distribution (7) comprennent un ou plusieurs récipients (10, 11) pour stocker les composants actifs biologiques et **en ce que** les moyens de distribution (7) comprennent des moyens de commutation grâce auxquels une substance particulière en provenance d'un récipient particulier est administré de manière sélective.

2. Dispositif selon la revendication 1, **caractérisé en ce que** les moyens de distribution (7) sont disposés à l'intérieur des moyens d'attache (5) ou à proximité de ceux-ci.

3. Dispositif selon la revendication 2, **caractérisé en ce que** les moyens de distribution (7) comprennent un élément de contact (8) qui est en contact avec la membrane muqueuse nasale une fois que le dispositif (2) a été attaché.

4. Dispositif selon l'une quelconque des revendications précédentes **caractérisé en ce que** le dispositif est conçu comme un anneau nasal.
